(19) **Europäisches Patentamt**

**European Patent Office**

**Office européen des brevets**

(11) Veröffentlichungsnummer: **0 291 573 B1**

(12) **EUROPÄISCHE PATENTSCHRIFT**

(45) Veröffentlichungstag der Patentschrift: **04.09.91**

(51) Int. Cl.⁵: **F16F 15/16**

(21) Anmeldenummer: **87115229.4**

(22) Anmeldetag: **17.10.87**

(54) **Drehschwingungsdämpfer.**

(30) Priorität: **16.05.87 DE 3716441**

(43) Veröffentlichungstag der Anmeldung:
**23.11.88 Patentblatt 88/47**

(45) Bekanntmachung des Hinweises auf die
Patenterteilung:
**04.09.91 Patentblatt 91/36**

(84) Benannte Vertragsstaaten:
**DE FR GB IT SE**

(56) Entgegenhaltungen:
**DE-A- 3 340 258**
**DE-A- 3 340 259**
**US-A- 4 496 332**

(73) Patentinhaber: **Firma Carl Freudenberg**
**Höhnerweg 2-4**
**W-6940 Weinheim/Bergstrasse(DE)**

(72) Erfinder: **Seifert, Heinz**
**Hauptstrasse 99**
**W-6947 Laudenbach(DE)**
Erfinder: **Eckel, Hans-Gerd, Dr.**
**Im Hefen 1a**
**W-6945 Hirschberg 2(DE)**

## Beschreibung

Die Erfindung betrifft einen Drehschwingungsdämpfer nach dem Oberbegriff von Anspruch 1.

Ein solcher Drehschwingungsdämpfer ist aus der US-A-4,496,332 bekannt. Der die Rotationsachse schlauchförmig umhüllende Federkörper aus weichelastischem Gummi dient dabei insbesondere der Abkoppelung, d.h. der schwingungsmäßigen Isolierung des Lüfterrades eines Deckenlüfters in bezug auf die motorerregten Schwingungen. Die Drehzahl des Lüfterrades ist jedoch in diesem Falle äußerst niedrig, wodurch im Bereich des Federkörpers nennenswerte Fliehkräfte nicht vorhanden sind. Es kann sich daher auch keine nennenswerte Beeinträchtigung der Relativbeweglichkeit des Federkörpers in bezug auf die ihn außenseitig umschließende, metallische Hülse des Lüfterrades ergeben. Eine Verwendung entsprechend ausgebildeter und angeordneter Federkörper in bezug auf die Dämpfung der Drehschwingungen von schnell umlaufenden Körpern ist bisher noch nicht bekannt geworden.

Außerdem ist ein Drehschwingungstilger nach der DE-A- 3340 259 bekannt, dessen Elastomerkörper zwischen einer Nabe und einem Schwungring einvulkanisiert ist. Dieser Elastomerkörper bildet Ausnehmungen, die durch einstückig mit dem Elastomerkörper verbundene Dichtelemente verschließbar sind. Das Dichtelement der flüssigkeitsgefüllten Kammer wird durch eine justierbare Andruckeinrichtung außenseitig auf den Schwungring gedrückt, so daß eine Reibung zwischen den Teilen möglich ist, um die Frequenz des Drehschwingungstilgers zu beeinflussen. Diese Art der Abdichtung der mit einem viskosen Medium gefüllten Kammer ist im Hinblick auf Dichtheit und Gebrauchsdauer nur wenig befriedigend. Der Federkörper aus elastomerem Werkstoff reibt bestimmungsgemäß am Schwungring, was hohen Verschleiß entlang der radialen und axialen äußeren Anlageflächen bedingt.

Um den Verschleiß geringfügig zu reduzieren, ist eine feinere Bearbeitung der Schwungringoberfläche möglich, so daß eine hohe Oberflächengüte entsteht. Die Gebrauchsdauer bei guter Funktion wird dadurch nicht wesentlich verlängert, wohingegen die Herstellungskosten wegen der vergleichsweise aufwendigen Bearbeitung stark ansteigen.

Der Erfindung liegt die Aufgabe zugrunde, einen Drehschwingungsdämpfer zu zeigen, der sich in bezug auf Drehschwingungen einer Frequenz von weniger als 100 Hz, vorzugsweise von weniger als 50 Hz durch eine gute Wirksamkeit auszeichnet. Darüber hinaus soll der erfindungsgemäße Drehschwingungsdämpfer auch bei einer horizontalen Lagerung der Drehachse ein verbessertes Unwuchtverhalten bis zu Drehzahlen von 12000 U/min aufweisen.

Diese Aufgabe wird erfindungsgemäß bei einem Drehschwingungsdämpfer der eingangs genannten Art durch die kennzeichnenden Merkmale von Anspruch 1 gelöst. Auf vorteilhafte Ausgestaltungen nehmen die Unteransprüche Bezug.

Bei dem erfindungsgemäßen Drehschwingungsdämpfer sind der Nabenring und der Schwungring durch Führungsringe relativ verdrehbar aufeinander abgestützt. Außerdem ist der Federkörper in einem radialen Abstand einerseits von dem Nabenring und andererseits von dem Schwungring angeordnet, wobei zumindest der durch den Abstand gebildete, radial außenseitig liegende Spalt zwischen dem Schwungring und dem Federkörper in radialer und in axialer Richtung nach außen abgeschlossen und mit einem fließfähigen, inkompressiblen Medium gefüllt ist. Dadurch, daß der Nabenring und der Schwungring durch Führungsringe relativ verdrehbar aufeinander abgestützt sind, weißt der Drehschwingungsdämpfer auch bei horizontaler Lagerung der Drehachse ein verbessertes Unwuchtverhalten auf. Außerdem vermag der Federkörper nach der oben beschriebenen Ausgestaltung des Drehschwingungsdämpfers weder auf der Außenseite noch auf der Innenseite die ihm gegenüberliegenden Oberflächen einerseits des Schwungringes und andererseits des Nabenringes zu berühren. Er ist dadurch auch beim Auftreten von Relativverdrehungen zwischen beiden keinen reibend wirkenden Einflüssen ausgesetzt. Seine Relativbeweglichkeit in bezug auf beide angrenzenden Maschinenteile bleibt vielmehr auch in diesem Falle voll erhalten. Sie erfährt auch bei Einleitung höchster Drehzahlen in den Drehschwingungsdämpfer keinerlei Veränderung, weil die sich in diesem Falle in dem Federkörper ergebenden Fliehkräfte durch das ihn außenseitig umschließende, fließfähige und inkompressible Medium auf den unnachgiebigen Schwungring übertragen und damit neutralisiert werden. Fliehkraftbedingte Deformierungen können daher in dem Federkörper des erfindungsgemäßen Drehschwingungsdämpfers nicht mehr auftreten.

Die einzigen Deformierungen, denen der Federkörper betriebsbedingt ausgesetzt ist, ergeben sich vielmehr ausschließlich aus den betriebsbedingt aufzunehmenden Drehschwingungen. Hierfür kann der Federkörper leicht in einer optimalen Weise gestaltet werden, was es ermöglicht, mit vergleichsweise geringen Mitteln eine ausgezeichnete Dämpfungswirkung zu erzielen.

In der einfachsten Ausführung ist nur der den Federkörper außenseitig umschließende Ringspalt mit einem fließfähigen, inkompressiblen Medium gefüllt. Die Ausführung hat den sekundären Vorteil, daß betriebsbedingte Erwärmungen und dementsprechende Volumenvergößerungen des Federkörpers und/oder des in dem Spalt enthaltenen, inkompressiblen Mediums nicht mehr zum Aufbau eines naoh außen in Erscheinung tretenden Druckes führen müssen. Sie können vielmehr in den gebräuchlichen Anwendungsfällen leicht kompensiert werden durch bewußte Inkaufnahme einer entsprechenden, radial nach innen gerichteten Relativverlagerung des aus gummielastischem Material bestehenden Federkörpers. Ist diese nicht erwünscht, so besteht die Möglichkeit, den den Federkörper bildenden Mantel an wenigstens einer Stelle seines Umfanges mit einer radialen Durchbrechung zu versehen, durch welche das inkompressible Medium im erforderlichen Maße nach innen entweichen kann. Es sollte in einem solchen Falle zweckmäßig dieselbe Dichte haben wie der den Federkörper bildende Werkstoff. Je nach Position einer entsprechenden Durchbrechung kann sich in diesem Falle bei Außerbetriebsetzung des Drehschwingungsdämpfers, d.h. bei Wellenstillstand, eine relative Verlagerung des darin enthaltenen Flüssigkeitsvolumens in die dann unten befindlichen Zonen ergeben.

Bei erneuter Einleitung einer Drehbewegung verteilen sich die diesbezüglichen Mengen infolge der dann auf sie einwirkenden Fliehkräfte aber wiederum sehr schnell in rotationssymmetrischer Weise in den nach außen weisenden Freiräumen. Sie bewirken hier wiederum die vorstehend beschriebene, radiale Abstützung des Federkörpers auf dem in radialer Richtung nach außen unnachgiebigen Schwungring.

Gemäß einer vorteilhaften Ausgestaltung ist vorgesehen, daß zumindest einer der Führungsringe auf einem Mitnehmer gelagert und in radialer Richtung zwischen Nabenring und Schwungring angeordnet ist. Durch die Festlegung des Federkörpers ausschließlich an den Mitnehmern folgt der Schwungring den im Bereich des Nabenringes wirksamen Drehschwingungen nicht in einer synchronen Weise, was zur Dämpfung der hier wirksamen Verdrehschwingungen ausgenutzt wird. Neben einem verbesserten Unwuchtverhalten kann auch das Dämpfungsverhalten des Drehschwingungsdämpfers bedingt durch die geringe Reibung zwischen Naben- und Schwungring positiv beeinflußt werden.

Die in qualitativer Hinsicht erzielte Dämpfungswirkung läßt sich vergrößern, wenn nicht nur der Spalt zwischen dem Federkörper und dem Schwungring sondern zusätzlich auch noch der Spalt zwischen dem Federkörper und dem Nabenring mit einem fließfähigen, inkompressiblen Medium gefüllt ist. Dieses kann hinsichtlich seiner Zusammensetzung mit demjenigen übereinstimmen, das in dem radial außenliegenden Spalt enthalten ist. Die Volumenvergrößerung infolge der sich normalerweise betriebsbedingt ergebenden Erwärmung bedarf in diesem Falle indessen der gesonderten Beachtung. Sie kann beispielsweise auch dadurch ausgeglichen werden, daß die die Flüssigkeit enthaltenden Spalte in axialer und/oder in radialer Richtung zumindest an einer Stelle des Umfanges nachgiebig begrenzt sind, beispielsweise durch einen Federkörper.

Als fließfähiges Medium kann in dem erfindungsgemäßen Drehschwingungsdämpfer Öl zur Anwendung gelangen. Dieses kann eine äußerst niedrige Viskosität haben, was in Verbindung mit einem dämpfungsarmen Werkstoff zur Herstellung des Federkörpers die Erzielung extremer Tilgerwirkungen gestattet. Entsprechende Ausführungen des erfindungsgemäßen Drehschwingungsdämpfers eignen sich besonders für Anwendungsfälle, bei denen in einem eng begrenzten Frequenzbereich kritische Störschwingungen in Erscheinung treten.

Die Schwungmasse des Schwungringes wird für entsprechende Anwendungsfälle mit der Federelastizität des Federkörpers derart abgestimmt, daß die sich ergebende Resonanzfrequenz mit der Frequenz der Störschwingung im wesentlichen übereinstimmt.

Für gebräuchliche Anwendungsfälle hat es sich demgegenüber als vorteilhaft bewährt, wenn ein Öl höherer Viskosität zur Anwendung gelangt, beispielsweise ein Silikonöl. Es ergibt sich in diesem Falle eine wesentlich breitbandigere Dämpfungswirkung.

Als fließfähiges Medium können auch Fette zur Anwendung gelangen. Neben einer Vereinfachung der Abdichtungsproblematik resultiert in diesem Falle eine besonders gute Dauerschmierung der Führungen, welche für die Lagerung des Schwungringes auf dem Nabenring benötigt werden. Es bereitet daher keinerlei Probleme, Ausführungen zu erzeugen, welche während ihrer gesamten Gebrauchsdauer keiner Nachschmierung bedürfen.

Im Hinblick auf eine weitere Vergrößerung der qualitativ erzielten Dämpfungswirkung hat es sich als vorteilhaft bewährt, wenn der Federkörper wenigstens auf der Außenseite mit wenigstens einem sich im wesentlichen axial erstreckenden, radialen Vorsprung versehen ist und wenn der Spalt im Bereich des Vorsprunges zu einer in den Außenring eingreifenden Tasche erweitert ist, die den Vorsprung bei unverdrehtem Schwungring in einem Abstand umschließt. Bei einer Relativverdrehung des Schwungringes ergibt sich in diesem Falle eine stark vergrößerte Dämpfungswirkung sowie ein Endanschlag, durch den die maximale Auslenkung des Schwungringes auf einen festen Wert begrenzt ist.

Auch bei extremen Überlastungen können auf diese Weise Beschädigungen ausgeschlossen werden.

Die Tasche kann in Umfangsrichtung eine im wesentlichen gleichbleibende, radiale Tiefe aufweisen. Sie bewirkt in diesem Falle neben einer Begrenzung der maximalen Auslenkung des Schwungringes auf einen festen Wert einen linearen Anstieg der Dämpfungswirkung nach Eintreten einer Relativverdrehung. Bei Ausführungen, bei denen die Tasche außenseitig durch eine Fläche begrenzt ist, welche ein im wesentlichen kreisbogenförmig begrenztes Profil aufweist mit einem Radius (R 1), der kleiner ist als der Radius (R 2) der den Spalt außerhalb der Tasche begrenzenden Kreisfläche, ergibt sich demgegenüber neben einer Begrenzung der Relativverdrehbarkeit des Schwungringes auf einen festen Wert ein progressiver Anstieg der Dämpfungswirkung nach Einsetzen der Relativverdrehung. Auch hierfür gibt es zahlreiche sinnvolle Anwendungsmöglichkeiten.

In Fällen, in denen sowohl der den Federkörper außenseitig als auch der den Federkörper innenseitig begrenzende Spalt mit einer übereinstimmenden, inkompressiblen Flüssigkeit gefüllt ist besteht die Möglichkeit, Vorsprüngen der vorstehend angegebenen Art in Umfangsrichtung versetzte, den Federkörper in radialer Richtung durchdringende Ausnehmungen zuzuordnen, welche zu einer Drosselöffnung verengt sind. Sie bewirken bei einer Relativverdrehung des Schwungringes eine weitere Steigerung der insgesamt erzielten Dämpfungswirkung. Die Durchmesserabstimmung und Gestaltung der Drosselöffnungen wird weitgehend durch die Federelastizität des Federkörpers, die Viskosität, die Größe und Ausbildung der in die Taschen eingreifenden Vorsprünge sowie durch die angestrebte Dämpfungswirkung bestimmt.

Sie bereitet dem auf dem vorstehend angesprochenen Sachgebiet tätigen Fachmann keine besonderen Probleme.

Des weiteren bedarf jeder Spalt des erfindungsgemäßen Drehschwingungsdämpfers, in welchem betriebsbedingt entweder Flüssigkeit vorhanden ist oder in welchem in irgendeinem Betriebszustand Flüssigkeit eindringen kann der allseitigen Abdichtung. Die Gewährleistung der diesbezüglichen Bedingung läßt sich außenseitig und innenseitig relativ einfach erfüllen durch Verwendung eines Schwungringes und eines Nabenringes, die in den den Spalt begrenzenden Bereichen undurchlässig sind. Demgegenüber werden in axialer Richtung beiderseits Dichtungen benötigt, welche die Relativbeweglichkeit des Schwungringes in bezug auf den Nabenring möglichst wenig beeinträchtigen. Als besonders vorteilhaft hat es sich in dieser Hinsicht bewährt, wenn der Spalt in axialer Richtung beiderseits durch starr und flüssigkeitsdicht mit dem Schwungring verbundene Dichtscheiben axial verschlossen ist und wenn die Dichtscheiben in bezug auf den Nabenring relativ verdrehbar sind und das Profil der Spalten in radialer Richtung zumindest bis zur Ebene der innersten Begrenzungsfläche überlappen. Die Dichtscheiben sollen bei einer solchen Ausführung dem Nabenring dicht angenähert sein, wobei im Bereich zwischen beiden eine Labyrinthdichtung vorgesehen sein kann. Sie begünstigt die Erzielung eines ausreichenden Abdichtungsergebnisses in bezug auf das Bestreben der enthaltenen Flüssigkeit, den Drehschwingungsdämpfer bei Außerbetriebsetzung an der tiefsten Stelle des Hohlraumes zu verlassen. Ein solches Bestreben tritt mit zunehmender Viskosität und mit abnehmender Weite des Spaltes immer weniger in Erscheinung.

Eine entsprechende Ausbildung der Abdichtung empfiehlt sich daher insbesondere für Ausführungsfälle, bei denen die enthaltene Flüssigkeit von höherer Viskosität ist und durch einen vergleichsweise engen Spalt an einem Austreten aus den Spalten gehindert werden kann.

In Fällen, in denen die Spalte eine Flüssigkeit enthalten, welche von einer sehr niedrigen Viskosität ist, wird demgegenüber eine höherwertige Dichtung benötigt, beispielsweise eine Lippendichtung. Diese wird zweckmäßig flüssigkeitsdicht und statisch ruhend auf dem Nabenring gelagert, wobei die Dichtlippe den Schwungring fliehkraftbedingt berührt. Abweichende Ausführungen sind ebenfalls möglich und insbesondere Ausführungen, bei denen die Lippendichtung statisch ruhend in dem Schwungring gelagert ist und eine Dichtlippe aufweist, welche fliehkraftbedingt von dem Nabenring abgehoben werden kann. Sie empfiehlt sich insbesondere in Verbindung mit Dichtscheiben der vorstehend beschriebenen Art. Während der normalen Drehbewegung des Drehschwingungsdämpfers ergibt sich in diesem Falle nämlich ohnehin kein Dichtproblem. Die unter solchen Betriebsbedingungen von der Gegenfläche abgehobenen Dichtlippen sind dann auch nicht dem Verschleiß ausgesetzt. Die Dauerhaltbarkeit des Drehschwingungsdämpfers erfährt somit eine deutliche Vergrößerung.

Der Gegenstand der vorliegenden Erfindung wird nachfolgend anhand der in der Anlage beigefügten Zeichnung weiter verdeutlicht. Es zeigen:

Figur 1     einen Drehschwingungsdämpfer in längsgeschnittener Darstellung, bei dem die an den Federkörper innen- und außenseitig angrenzenden Spalte mit Flüssigkeit gefüllt sind.

Figur 2     eine Ausführung ähnlich Figur 1 in quergeschnittener Darstellung, bei der der Federkörper an zwei Stellen seines Umfanges von einer radialen Durchtrennung des ihn bildenden Mantels durchdrungen ist.

Figur 3     eine Ausführung ähnlich Figur 2, bei der der Federkörper mit zwei einander gegenüberliegenden, in radialer Richtung nach außen weisenden Vorsprüngen versehen ist, welche im unbelasteten Zustand des Drehschwingungsdämpfers in Taschen des Schwungringes radial eingreifen. Den Vorsprüngen sind in Umfangsrichtung beiderseits Durchbrechungen des den Federkörper bildenden Mantels vorgelagert.

Figur 4    eine Ausführung ähnlich Figur 3, bei der der den Federkörper bildende Mantel an keiner Stelle seines Umfanges von einer Durchbrechung durchdrungen ist.

Figur 5    eine Ausführung ähnlich Figur 3, bei der die Taschen und die Vorsprünge ein kreisbogenförmig begrenztes Profil aufweisen. Den Vorsprüngen sind in Umfangsrichtung beiderseits Durchbrechungen des den Federkörper bildenden Mantels vorgelagert.

Figur 6    einen Drehschwingungsdämpfer ähnlich Figur 5, bei dem der den Federkörper bildende Mantel an keiner Stelle seines Umfanges von einer Durchbrechung durchdrungen ist.

Figur 7    einen Drehschwingungsdämpfer ähnlich Figur 1, bei dem die flüssigkeitsgefüllten Spalte in axialer Richtung beiderseits durch starr und flüssigkeitsdicht mit dem Schwungring verbundene Dichtscheiben axial verschlossen sind, wobei die Dichtscheiben in bezug auf den Nabenring relativ verdrehbar sind und das Profil der Spalten in radialer Richtung zumindest bis zur Ebene der innersten Begrenzungsfläche überlappen.

Figur 8    einen Drehschwingungsdämpfer ähnlich der in Figur 1 gezeigten Ausführung, bei dem im rechten Teil der Darstellung ein Mitnehmer zur Festlegung des Federkörpers an dem Nabenring zur Anwendung gelangt, der räumlich von der Führung des Außenringes getrennt ist. Die Ausführung zeichnet sich durch eine ausgezeichnete, und besonders einfach gestaltete, statische Abdichtung der mit Flüssigkeit gefüllten Spalte aus, welche hinsichtlich ihrer Wirkung der Ausführung nach Figur 7 ähnlich ist.

Figur 9    eine Ausführung des erfindungsgemäßen Drehschwingungsdämpfers ähnlich Figur 8, bei der der Nabenring gegenüber dem Schwungring durch eine Lippendichtung abgedichtet ist.

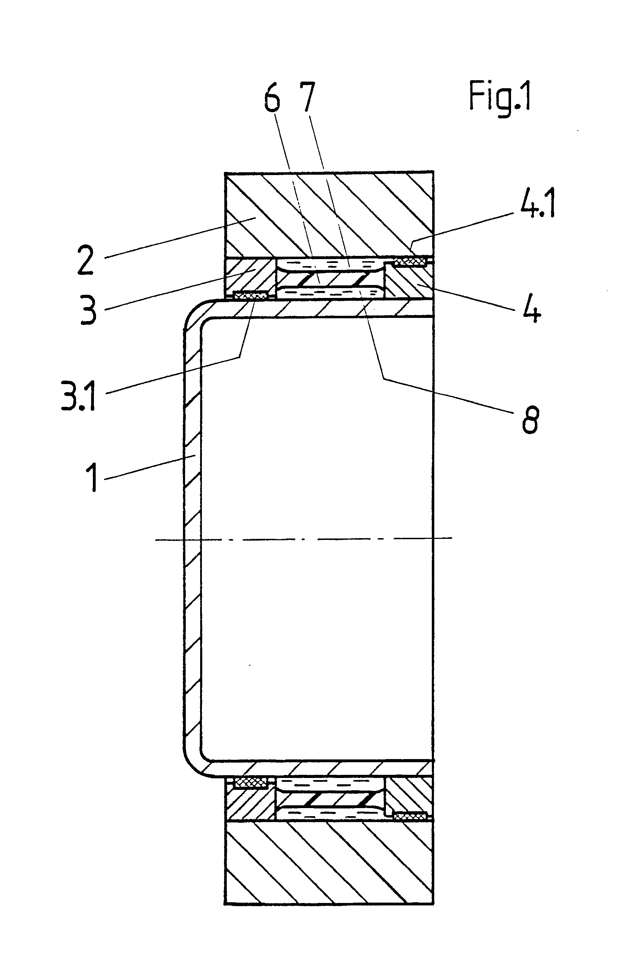

Der in Figur 1 gezeigte Drehschwingungsdämpfer umfaßt neben dem Nabenring 1 den Schwungring 2. Beide sind durch Führungen 3.1, 4.1 relativ verdrehbar aufeinander abgestützt, wobei die beiden Führungen auf Mitnehmern 3, 4 gelagert sind, die einen axialen Abstand voneinander haben. Die Mitnehmer 3,4 sind durch einen schlauchförmigen Federkörper 6 in axialer Richtung verbunden, der die Drehachse des Drehschwingungsdämpfers rotationssymmetrisch umschließt und aus gummielastischem Werkstoff besteht. Der Federkörper hat sowohl in radialer Richtung nach innen als auch in radialer Richtung nach außen jeweils einen radialen Abstand von den Oberflächen der gegenüberliegenden Maschinenteile. Durch die jeweiligen Abstände werden Spalte 7, 8 gebildet, welche mit einem fließfähigen, inkompressiblen Medium gefüllt sind, vorzugsweise mit einer Flüssigkeit.

Zur Funktion ist folgendes auszuführen:

Der gezeigte Drehschwingungsdämpfer wird mit seinem Nabenring 1 unverdrehbar und konzentrisch an dem zu bedämpfenden Maschinenteil festgelegt. Er folgt daher dessen Drehbewegungen in einer vollkommen synchronen Weise.

Der Nabenring ist topfförmig gestaltet, und auf dem sich in axialer Richtung erstreckenden Teil seines Profils ist der Mitnehmer 4 unverdrehbar und auch in axialer Richtung unverschiebbar festgelegt. Dieser trägt auf seinem Außenumfang den Führungsring 4.1, der relativ verschiebbar an der Innenseite des Schwungringes 2 anliegt.

Der Schwungring 2 enthält im linken Teil der Darstellung den Mitnehmer 3, der unverdrehbar und axial nicht verschiebbar an ihm festgelegt ist. Der Mitnehmer 3 weist auf der Innenseite den Führungsring 3.1 auf, der relativ verschiebbar an der Oberfläche des sich in axialer Richtung erstreckenden Teiles des Nabenringes 1 anliegt.

Beide Mitnehmer sind durch den Federkörper 6 verbunden. Dieser ist der Rotationsachse des Drehschwingungsdämpfers rotationssymmetrisch zugeordnet und aus gummielastischem Werkstoff hergestellt. Er ist stirnseitig durch Vulkanisation einerseits mit dem Mitnehmer 3 und damit dem Schwungring 2 und andererseits mit dem Mitnehmer 4 und damit dem Nabenring verbunden. Des weiteren ist der Federkörper von geringerer radialer Erstreckung als der Abstand zwischen dem Schwungring 2 und dem Nabenring 1. Die hierdurch gebildeten Spalte sind beiderseits mit einer übereinstimmenden Flüssigkeit gefüllt nämlich mit einem Silikonöl.

Betriebsbedingt in den Nabenring 1 eingeleitete Drehschwingungen werden von diesem über den Mitnehmer auf den Federkörper 6 und von diesem über den Mitnehmer 3 auf den Schwungring 2 übertragen. Bedingt durch die Elastizität des Federkörpers 6 folgt der Schwungring 2 den im Bereich des Nabenringes 1 wirksamen Drehschwingungen nicht in einer synchronen Weise. Er übt dadurch über den Federkörper 6 rückwirkende Kräfte auf den Nabenring 1 aus, was zur Dämpfung der hier wirksamen Verdrehschwingungen ausgenutzt wird.

Die relative Zuordnung des Federkörpers 6 zu dem Schwungring 2 und zu dem Nabenring 1 erfährt infolge der sich betriebsbedingt ergebenden Fliehkräfte keinerlei Veränderung. Das sich ergebende Dämpfungsverhalten ist daher vollkommen drehzahlunabhängig und wird allein bestimmt durch die Viskosität der zur Anwendung gelangenden Flüssigkeit, die Größe, Ausbildung und gegenseitige Zuordnung der einander im Bereich der Spalte gegenüberliegenden Oberflächen des Federkörpers einerseits und andererseits des Schwungringes bzw. des Nabenringes sowie der Baugröße. Die Abstimmung des erfindungsgemäßen Drehschwingungsdämpfers auf bestimmte Anwendungsgegebenheiten ist daher äußerst einfach. Sie ermöglicht ohne weiteres eine Optimierung im Hinblick auf Ausführungen, die sich bei besonders geringem Gewicht durch eine besonders gute Wirksamkeit auszeichnen.

Die betriebsbedingte Erwärmung führt zu einer Volumenvergrößerung zumindest der in den Spalten enthaltenen Flüssigkeitsmenge und des Federkörpers. Diese wird bei der gezeigten Ausführung durch eine axiale Relativverlagerung des Schwungringes auf den Führungsringen 3.1 und 4.1 in eine Richtung nach links kompensiert und hat keinen funktionsverändernden Druckaufbau zur Folge.

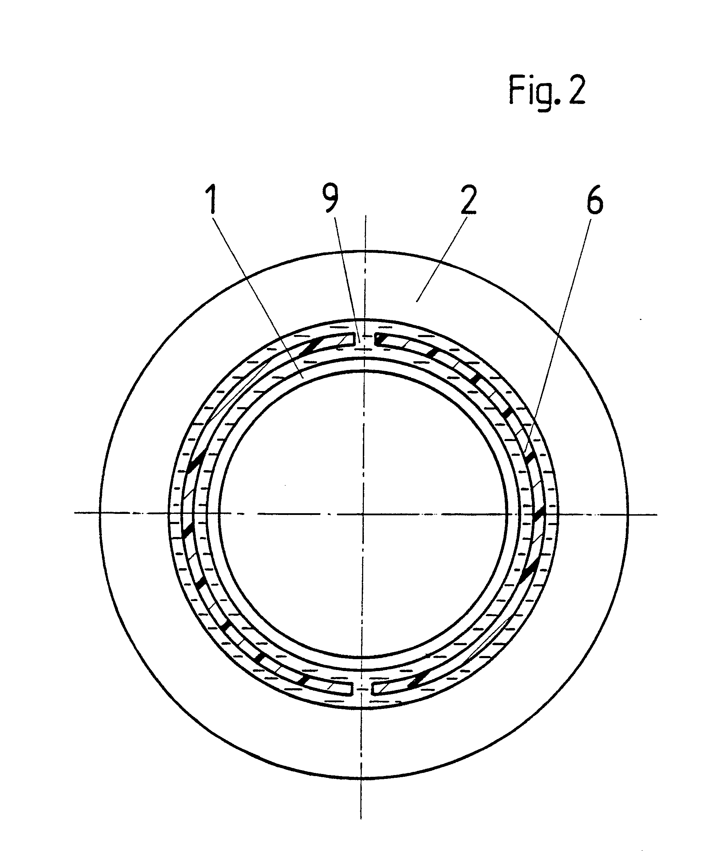

Die in Figur 2 gezeigte Ausführung ist der vorstehend beschriebenen ähnlich. Der den Federkörper 6 bildende Mantel ist jedoch an zwei einander gegenüberliegenden Stellen seines Umfanges von Ausnehmungen 9 durchdrungen, durch welche die in den Spalten enthaltene Flüssigkeit zwischen beiden Spalten hin- und herströmen kann. Der Federkörper wird hierdurch in statischer Hinsicht entlastet, was beispielsweise von Vorteil ist in bezug auf Anwendungen, in denen eine unsymmetrische Beaufschlagung der Spalten mit Wärme zu erwarten ist, beispielsweise nur von innen oder nur von außen.

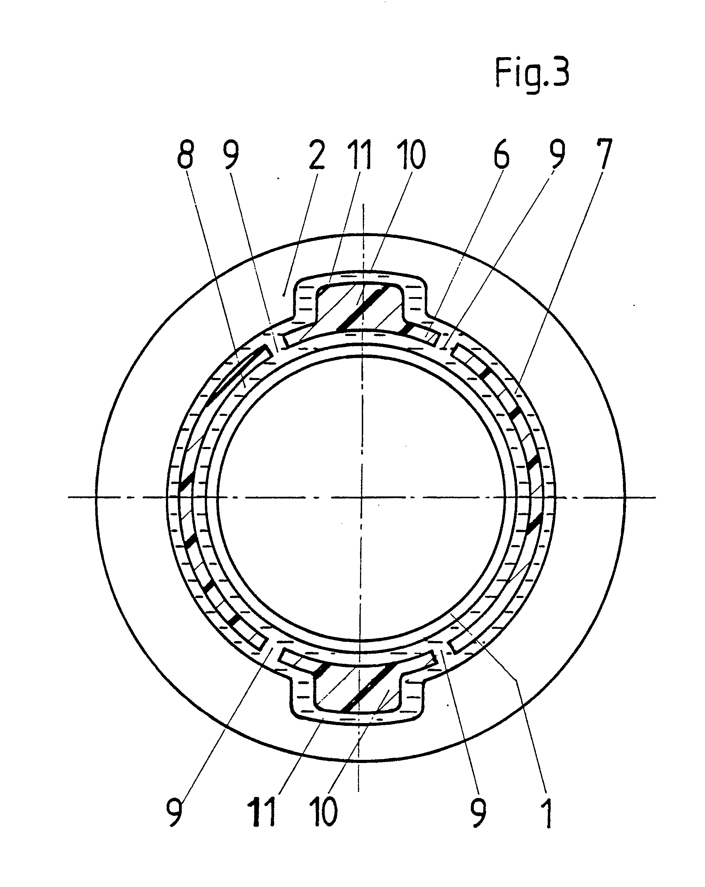

Die in Figur 3 gezeigte Ausführung ist der vorstehend beschriebenen ähnlich. Ergänzend zu vier einander gegenüberliegenden Durchbrechungen 9 des aus Gummi bestehenden Federkörpers 6 sind hierbei jedoch zwei einander gegenüberliegende, in radialer Richtung nach außen weisende Vorsprünge 10 des Federkörpers 6 vorgesehen, welche in entsprechend ausgebildete Taschen 11 des Schwungkörpers 2 eingreifen. Die Taschen 11 und die Vorsprünge 10 sind hinsichtlich ihres Profiles so gestaltet, daß sich bei unbelastetem Drehschwingungsdämpfer in allen Teilbereichen ein gegenseitiger Abstand ergibt. Die Einleitung einer Relativverdrehung erfordert indessen die Verdrängung von Flüssigkeitsbestandteilen aus den den Vorsprüngen 10 in Drehrichtung vorgelagerten Bereichen der Taschen 11, was zusätzliche Arbeit erfordert und eine besonders gute Dämpfungswirkung bedingt. Die Durchbrechungen 9 des Federkörpers können sehr eng gestaltet sein. Sie bilden in diesem Falle Drosselöffnungen, welche die Erzielung einer guten Dämpfungswirkung unterstützen.

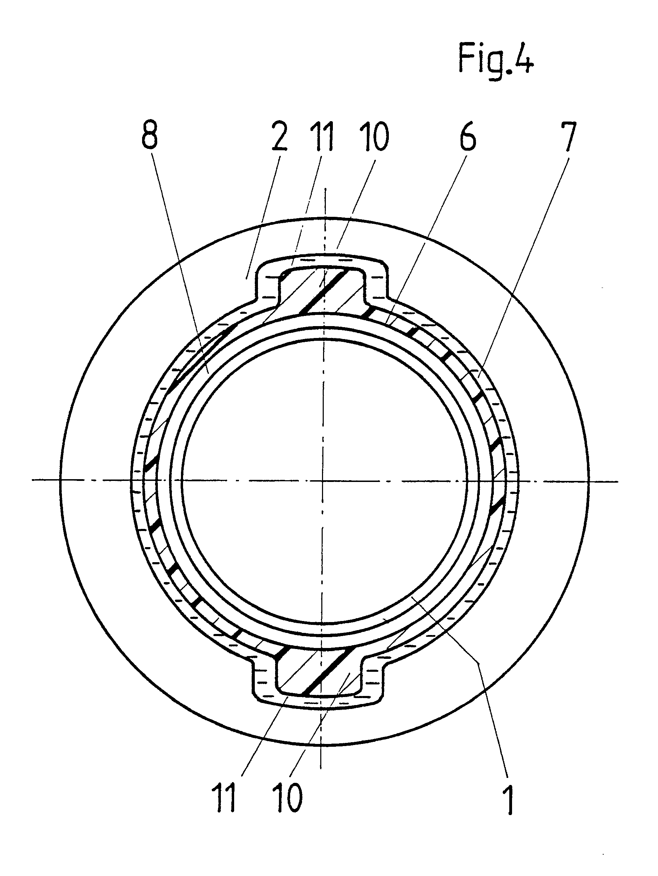

Die in Figur 4 gezeigte Ausführung ist der vorstehend beschriebenen ähnlich. Jedoch ist der Federkörper 6 nicht von Durchbrechungen durchdrungen. Die Spalte 7, 8 sind auch in diesem Falle mit einer übereinstimmenden Flüssigkeit gefüllt, beispielsweise mit einem Silikonöl. Auch nur die Füllung der äußeren Spalte 7 kann betriebsbedingt erforderlich werden.

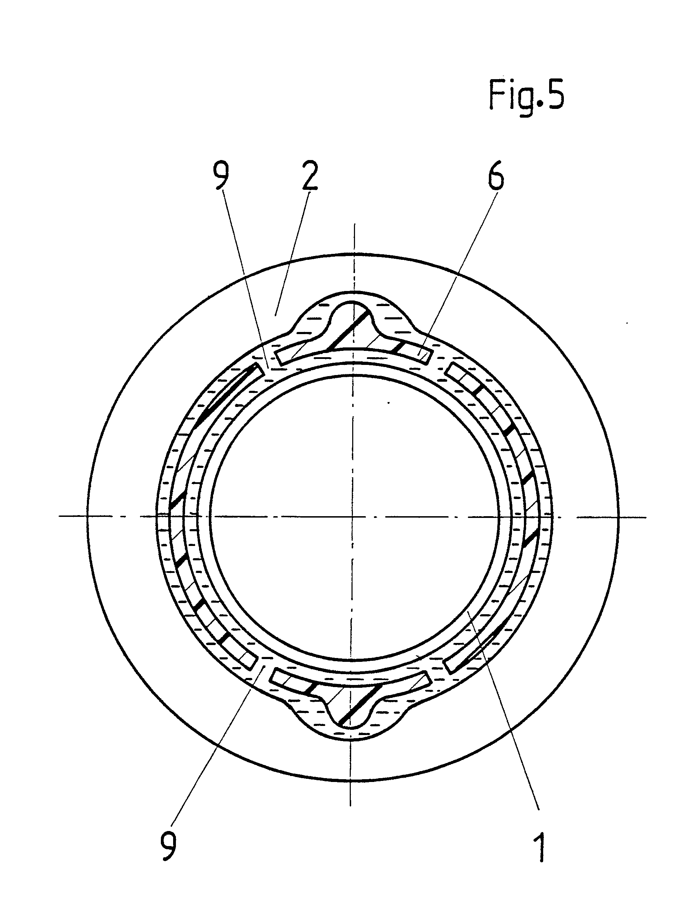

Die in Figur 5 gezeigte Ausführung ist der in Figur 3 gezeigten hinsichtlich ihrer Funktion und hinsichtlich ihres Aufbaues ähnlich. In diesem Falle haben indessen die Taschen und die Vorsprünge ein halbkreisförmiges Profil, was zu einer progressiven Dämpfungswirkung bei Einleitung einer Relativverdrehung des Nabenringes 1 in bezug auf den Schwungring 2 führt.

Die Durchbrechungen 9 des Federkörpers unterstützen auch in diesem Falle die erzielte Dämpfungswirkung.

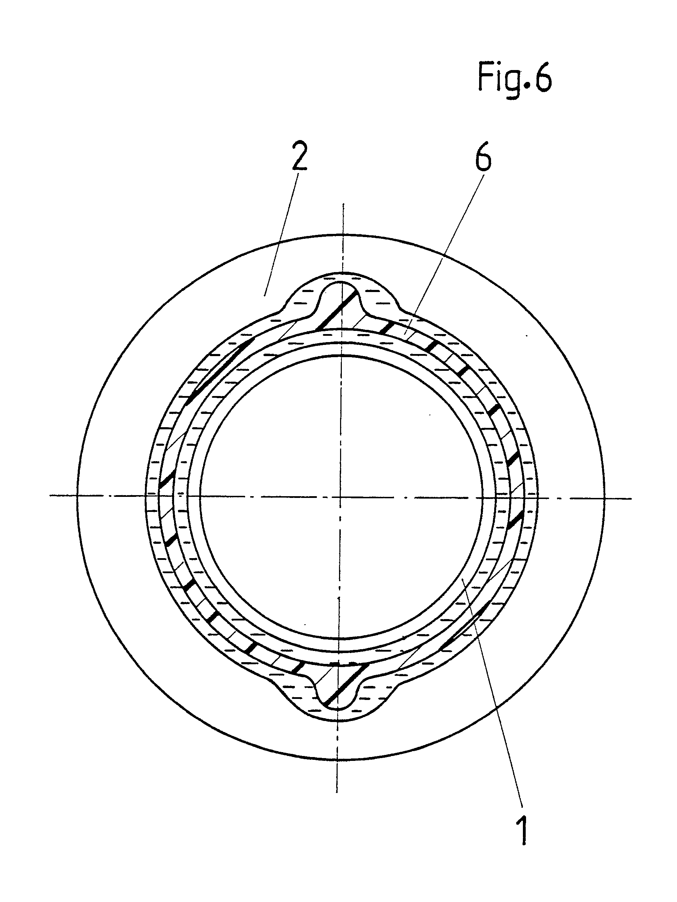

Die in Figur 6 gezeigte Ausführung entspricht der vorstehend beschriebenen. Es sind indessen keine Durchbrechungen des Federkörpers 6 vorhanden. Die erzielte Dämpfungswirkung ist dementsprechend etwas geringer.

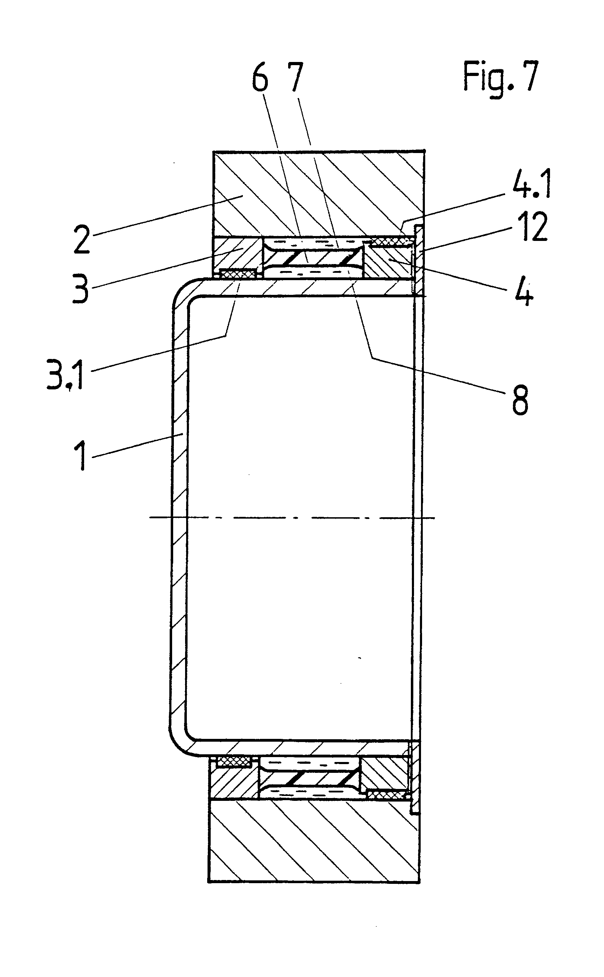

Die in Figur 7 gezeigte Ausführung ist hinsichtlich ihres Aufbaues und hinsichtlich ihrer Funktion derjenigen nach Figur 1 ähnlich. Zur Erzielung einer verbesserten Abdichtung der mit Flüssigkeit gefüllten Spalte 7, 8 ist indessen der Schwungring 2 mit einer flüssigkeitsdicht und statisch ruhenden Dichtscheibe 12 versehen, welche die innerste Begrenzungsfläche der Spalte 7, 8 geringfügig nach innen überlappt. Selbst bei höchsten Wellendrehzahlen kann dadurch keinerlei Flüssigkeit in axialer Richtung aus den Spalten 7, 8 austreten. Bei Wellenstillstand sind die auf die in den Spalten 7, 8 enthaltene Flüssigkeit ausgeübten Fliehkräfte ohnehin vernachlässigbar gering. Eine Leckage des Drehschwingungsdämpfers ist daher bei Wellenstillstand ohnehin nicht zu befürchten.

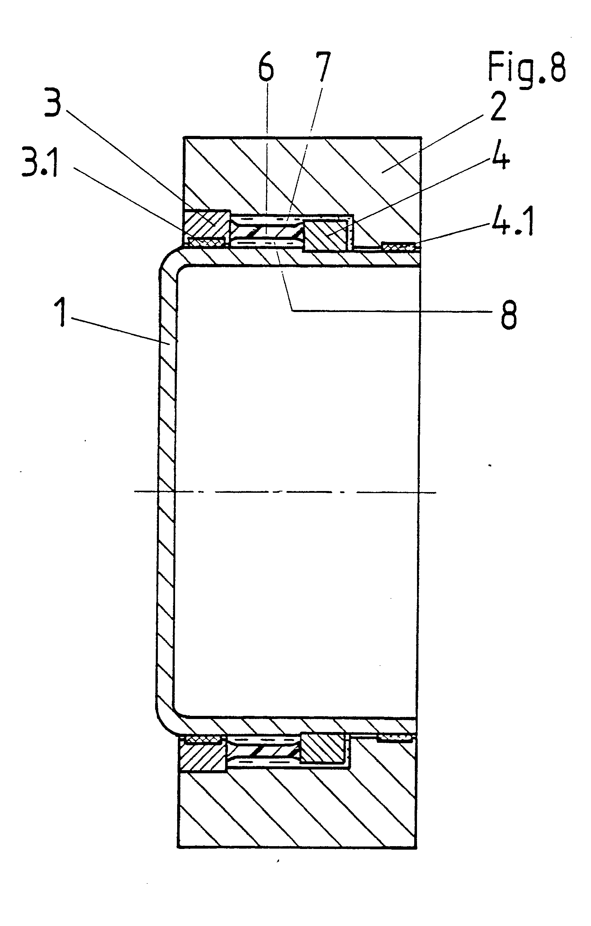

In funktioneller Hinsicht von ähnlicher Wirksamkeit wie vorstehend beschrieben ist die Ausführung nach Figur 8. In diesem Falle wurde der Mitnehmer 4 konstruktiv von dem zugehörigen Führungsring 4.1 getrennt, was es ermöglicht, das Profil des Schwungringes 2 in dem fraglichen Bereich der innersten Begrenzungsebene der Spalte 7, 8 dicht anzunähern.

Zusätzlich ergibt sich eine relative Vergrößerung des Spaltes 7 durch Bereiche, die von geringer Tiefe sind. In Verbindung mit der Verwendung von hochviskosen Flüssigkeiten, insbesondere in dem Spalt 7, ergibt sich hierdurch eine hohe Dämpfungswirkung, die insbesondere im Bereich niederfrequenter Schwingungen zum Tragen kommt.

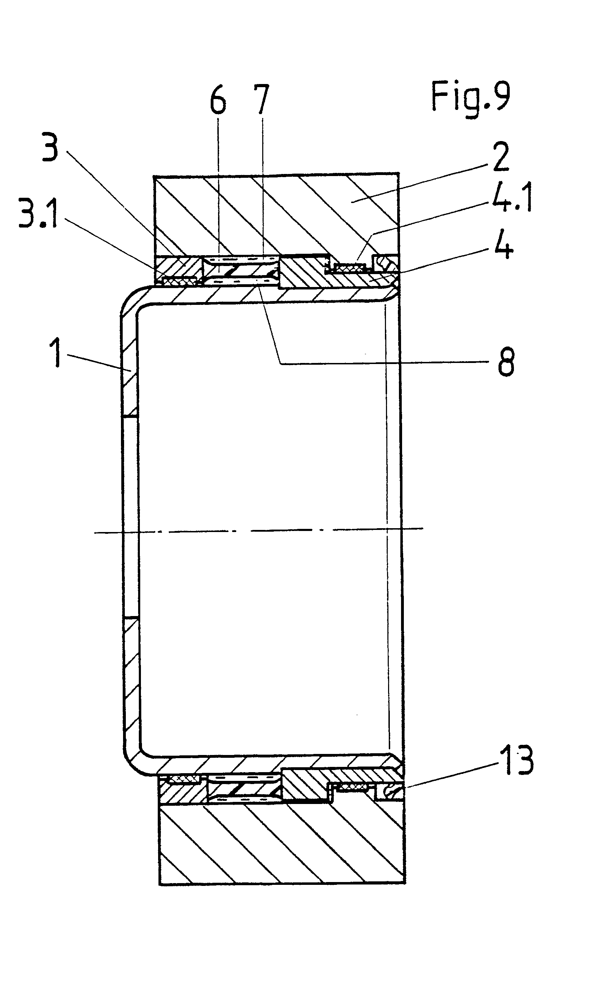

Die in Figur 9 gezeigte Ausführung ist der vorstehend beschriebenen ähnlich. Sie verfügt über eine zusätzliche Lippendichtung 13, die statisch ruhend und flüssigkeitsdicht auf dem Nabenring 1 gelagert ist und die den Schwungring 2 mit einer fliehkraftbelasteten Dichtlippe gleitend berührt. Die Dichtlippe erfährt mit zunehmender Drehzahl des abgedichteten Maschinenteiles eine zunehmende Anpressung an die zugehörige Innenfläche des Schwungringes 2. Das Abdichtungsergebnis ist dementsprechend ausgezeichnet und gestattet eine Verwendung des gezeigten Drehschwingungsdämpfers in Bereichen, in denen eine Verschmutzung durch Flüssigkeiten oder andere Stoffe nicht mehr akzeptabel ist.

**Patentansprüche**

1. Drehschwingungsdämpfer, umfassend einen Nabenring (1) und einen Schwungring (2), die einander in einem radialen Abstand umschließen und mittels einer Führung relativ verdrehbar ineinander gelagert sind, wobei in den durch den Abstand gebildeten Spalt Mitnehmer (3, 4) des Naben- (1) und des Schwungringes (2) eingreifen die einen axialen Abstand haben und die durch einen sich in axialer Richtung erstreckenden, im wesentlichen schlauchförmigen Federkörper (6) aus Gummi verbunden sind, dadurch gekennzeichnet, daß der Nabenring (1) und der Schwungring (2) durch Führungsringe (3.1, 4.1) relativ verdrehbar aufeinander abgestützt sind, daß der Federkörper (6) einen radialen Abstand einerseits von dem Nabenring (1) und andererseits von dem Schwungring (2) aufweist und daß zumindest der durch den Abstand gebildete Spalt (7) zwischen dem Schwungring (2) und dem Federkörper (6) in radialer und in axialer Richtung nach außen abgeschlossen und mit einem fließfähigen, inkompressiblem Medium gefüllt ist.

2. Drehschwingungsdämpfer nach Anspruch 1, dadurch gekennzeichnet, daß zumindest einer der Führungsringe (3.1) auf einem Mitnehmer (3) gelagert ist und daß der Mitnehmer (3) in radialer Richtung zwischen dem Nabenring (1) und dem Schwungring (2) angeordnet ist.

3. Drehschwingungdämpfer nach Anspruch 1 - 2, dadurch gekennzeichnet, daß zusätzlich der durch den Abstand zwischen dem Innenring (1) und dem Federkörper (6) gebildete Spalt (8) in radialer und in axialer Richtung nach außen abgeschlossen und mit einem fließfähigen inkompressiblen Medium gefüllt ist.

4. Drehschwingungsdämpfer nach Anspruch 1 bis 3, dadurch gekennzeichnet, daß das fließfähige Medium aus Öl besteht.

5. Drehschwingungsdämpfer nach Anspruch 4, dadurch gekennzeichnet, daß das Öl ein Silikonöl ist.

6. Drehschwingungsdämpfer nach Anspruch 1 bis 3, dadurch gekennzeichnet, daß das fließfähige Medium aus Fett besteht.

7. Drehschwingungsdämpfer nach Anspruch 1 bis 6, dadurch gekennzeichnet, daß der Federkörper (6) mit wenigstens einer den ihn bildenden Mantel in radialer Richtung durchdringenden Ausnehmung (9) versehen ist und daß das fließfähige Medium eine Dichte aufweist, die im wesentlichen mit der Dichte des den Federkörper (6) bildenden Werkstoffes übereinstimmt.

8. Drehschwingungsdämpfer nach Anspruch 1 bis 7, dadurch gekennzeichnet, daß der Federkörper (6) wenigstens auf der Außenseite mit wenigstens einem sich im wesentlichen axial erstreckenden, radialen Vorsprung (10) versehen ist und daß der Spalt (7) im Bereich des Vorsprunges (10) zu einer in den Außenring (2) eingreifenden Tasche (11) erweitert ist, die den Vorsprung (10) im unverdrehten Zustand des Schwungringes (2) in einem Abstand umschließt.

9. Drehschwingungsdämpfer nach Anspruch 8, dadurch gekennzeichnet, daß die Tasche (11) in Umfangsrichtung eine im wesentlichen gleichbleibende, radiale Tiefe aufweist.

10. Drehschwingungsdämpfer nach Anspruch 8, dadurch gekennzeichnet, daß die Tasche (11) außenseitig durch ein im wesentlichen kreisbogenförmiges Profil begrenzt ist und daß der Radius (R 1) des Profils kleiner ist als der Radius (R 2) der den Spalt außerhalb der Tasche begrenzenden Kreisfläche.

11. Drehschwingungsdämpfer nach Anspruch 7 bis 10, dadurch gekennzeichnet, daß die Ausnehmung (9) zu einer Drosselöffnung verengt ist.

12. Drehschwingungsdämpfer nach Anspruch 1 bis 11, dadurch gekennzeichnet, daß der Spalt in axialer Richtung beiderseits durch starr und flüssigkeitsdicht mit dem Schwungring verbundene Dichtscheiben axial verschlossen ist, daß die Dichtscheiben in dem Nabenring dichtend angenähert und relativ zu diesem verdrehbar sind und das Profil der Spalten in radialer Richtung zumindest bis zur Ebene der innersten Begrenzungsfläche überlappen.

13. Drehschwingungsdämpfer nach Anspruch 1 bis 11, dadurch gekennzeichnet, daß der Spalt (7, 8) auf wenigstens einer Seite seiner axialen Erstreckung durch eine Lippendichtung (13) abgeschlossen ist.

14. Drehschwingungsdämpfer nach Anspruch 13, dadurch gekennzeichnet, daß die Lippendichtung (13) statisch ruhend auf dem Nabenring (1) gelagert ist und daß die Dichtlippe den Schwungring (2) fliehkraftbelastet berührt.

**Claims**

1. A torsional vibration damper comprising a hub ring (1) and a fly-ring (2), one of which surrounds the other with a radial spacing and which are mounted so as to be rotatable relative to each other, one within the other, by means of a guide, drivers (3, 4) of the hub ring (1) and of the fly-ring (2) reaching into the gap formed by the spacing, said drivers having an axial spacing and being connected by an essentially tubular spring body (6) of rubber extending in the axial direction, characterised in that the hub ring (1) and the fly-ring (2) are supported on each other by guide rings (3.1, 4.1) in a manner which allows relative rotation, in that the spring body (6) has a radial spacing on the one hand from the hub ring (1) and on the other hand from the fly-ring (2), and in that at least the gap (7), formed by the spacing, between the fly-ring (2) and the spring body (6) is closed off from the outside in the radial and in the axial direction and filled with a flowable incompressible medium.

2. A torsional vibration damper according to claim 1, characterised in that at least one of the guide rings (3.1) is mounted on a driver (3), and in that the driver (3) is arranged between the hub ring (1) and the fly-ring (2) in the radial direction.

3. A torsional vibration damper according to either of claims 1 or 2, characterised in that in addition the gap (8) formed by the spacing between the inner ring (1) and the spring body (6) is closed off from the outside in the radial and in the axial direction and filled with a flowable incompressible medium.

4. A torsional vibration damper according to any of claims 1 to 3, characterised in that the flowable medium is composed of oil.

5. A torsional vibration damper according to claim 4, characterised in that the oil is a silicone oil.

6. A torsional vibration damper according to any of claims 1 to 3, characterised in that the flowable medium is composed of grease.

7. A torsional vibration damper according to any of claims 1 to 6, characterised in that the spring body (6) is provided with at least one opening (9) penetrating in the radial direction the envelope forming said spring body, and in that the flowable medium has a density which coincides essentially with the density of the material forming the spring body (6).

8. A torsional vibration damper according to any of claims 1 to 7, characterised in that the spring body (6) is provided at least on the outside with at least one radial projection (10) extending essentially axially, and in that in the region of the projection (10) the gap (7) is widened to form a pocket (11) which reaches into the outer ring (2) and in the non-rotated condition of the fly-ring (2) surrounds the projection (10) with a spacing.

9. A torsional vibration damper according to claim 8, characterised in that the pocket (11) has an essentially constant radial depth in the circumferential direction.

10. A torsional vibration damper according to claim 8, characterised in that the pocket (11) is bounded on the outside by an essentially circular arc-shaped profile, and in that the radius (R 1) of the profile is smaller than the radius (R 2) of the circular surface bounding the gap outside the pocket.

11. A torsional vibration damper according to any of claims 7 to 10, characterised in that the opening (9) is narrowed to form a restriction orifice.

12. A torsional vibration damper according to any of claims 1 to 11, characterised in that the gap is sealed on both sides in the axial direction by sealing washers connected rigidly and fluidtightly to the fly-ring, in that the sealing washers are brought close enough to form a seal in the hub ring and are rotatable relative to the latter and overlap the profile of the gaps in the radial direction, at least as far as the plane of the innermost boundary surface.

13. A torsional vibration damper according to any of claims 1 to 11, characterised in that the gap (7, 8) is closed off on at least one side of its axial extension by a lip seal (13).

14. A torsional vibration damper according to claim 13, characterised in that the lip seal (13) is mounted in static contact with the hub ring (1), and in that the sealing lip contacts the fly-ring (2) under centrifugal loading.

**Revendications**

1. Amortisseur de vibrations de rotation comprenant une bague de moyeu (1) et une bague oscillante (2) qui sont disposées concentriquement à une certaine distance radiale l'une de l'autre et qui peuvent tourner relativement l'une par rapport à l'autre au moyen d'un guide, tandis que des poussoirs (3, 4) de la bague de moyeu (1) et de la bague oscillante (2) pénètrent dans le jeu formé par cette distance, présentent une certaine distance axiale et sont assemblées par un corps élastique (6) en caoutchouc essentiellement en forme de tube flexible qui s'étend en direction axiale, caractérisé en ce que la bague de moyeu (1) et la bague oscillante (2) reposent l'une sur l'autre avec possibilité de rotation relative au moyen de bagues de guidage (3.1, 4.1), en ce que le corps élastique (6) présente une certaine distance radiale, d'une part par rapport à la bague de moyeu (1) et, d'autre part, par rapport à la bague oscillante (2) et qu'au moins le jeu (7) formé par la distance entre la bague oscillante (2) et le corps élastique (6) est fermé vers l'extérieur en direction axiale et en direction radiale et est rempli d'un fluide incompressible et pouvant s'écouler.

2. Amortisseur de vibrations de rotation selon la revendication 1, caractérisé en ce qu'au moins l'une des bagues de guidage (3.1) est montée sur un poussoir (3) et que le poussoir (3) est disposé en direction radiale entre la bague de moyeu (1) et la bague oscillante (2).

3. Amortisseur de vibrations de rotation selon les revendications 1, 2, caractérisé en ce que le jeu (8) formé par la distance entre la bague intérieure (1) et le corps élastique (6) est fermée en outre vers l'extérieur en direction axiale et radiale et est rempli d'un fluide incompressible et pouvant s'écouler.

4. Amortisseur de vibrations de rotation selon les revendications 1 à 3, caractérisé en ce que le fluide pouvant s'écouler est une huile.

5. Amortisseur de vibrations de rotation selon la revendication 4, caractérisé en ce que cette huile est une huile de silicone.

6. Amortisseur de vibrations de rotation selon les revendications 1 à 3, caractérisé en ce que le fluide pouvant s'écouler est une graisse.

7. Amortisseur de vibrations de rotation selon les revendications 1 à 6, caractérisé en ce que le corps élastique 6 est pourvu d'au moins une cavité (9) traversant, en direction radiale, l'enveloppe qui le constitue et que le fluide pouvant s'écouler présente une densité qui correspond essentiellement à la densité du matériau constituant le corps élastique (6).

8. Amortisseur de vibrations de rotation selon les revendications 1 à 7, caractérisé en ce que le corps élastique (6) est pourvu, au moins sur la face extérieure, d'au moins une saillie (10) radiale s'étendant essentiellement dans le sens axial et que le jeu (7) est élargi dans la zone de la saillie (10) pour former une cavité (11) pénétrant dans la bague extérieure (2) et entourant la saillie (10) quand la bague oscillante (2) n'a pas subi de rotation.

9. Amortisseur de vibrations de rotation selon la revendication 8, caractérisé en ce que la cavité (11) présente, en direction de la périphérie, une profondeur radiale essentiellement constante.

10. Amortisseur de vibrations de rotation selon la revendication 8 caractérisé en ce que la cavité (11) est délimitée extérieurement par un profil essentiellement en force d'arc de cercle et que le rayon R1 du profil est inférieur au rayon R2 de la surface circulaire délimitant le jeu en dehors de la cavité.

**11.** Amortisseur de vibrations de rotation selon les revendications 7 à 10, caractérisé en ce que la cavité (9) est rétrécie pour former un orifice d'étranglement.

**12.** Amortisseur de vibrations de rotation selon les revendications 1 à 11, caractérisé en ce que le jeu est fermé en direction axiale, de part et d'autre, par des disques d'étanchéité assemblés à la bague oscillante de manière rigide et étanche aux liquides, et en ce que les disques d'étanchéité sont rapprochés de manière étanche dans la bague de moyeu et peuvent tourner par rapport à celle-ci et dépassent le profil des jeux en direction radiale au moins jusqu'au plan de la surface limite la plus intérieure.

**13.** Amortisseur de vibrations de rotation selon les revendications 1 à 11, caractérisé en ce que le jeu (7, 8) est fermé sur au moins un côté de son extension axiale par un joint à lèvre (13).

**14.** Amortisseur de vibrations de rotation selon la revendication 13, caractérisé en ce que le joint à lèvre (13) repose statiquement sur la bague de moyeu (1) et que la lèvre d'étanchéité vient en contact de la bague oscillante (2) sous l'effet de la force centrifuge.

Fig.1

EP 0 291 573 B1

Fig. 2

12

Fig.3

Fig.4

Fig.5

Fig.6

Fig. 7

Fig.8

Fig.9